# EUROPÄISCHE PATENTSCHRIFT

(11) **EP 3 374 654 B1**
(45) Veröffentlichungstag und Bekanntmachung des Hinweises auf die Patenterteilung: **08.01.2020**
(21) Anmeldenummer: 16794584.9
(22) Anmeldetag: 08.11.2016
(51) Int. Cl.: F16D 55/2255, F16D 65/56

(54) **SCHEIBENBREMSE FÜR EIN NUTZFAHRZEUG**
DISK BRAKE FOR A UTILITY VEHICLE
FREIN À DISQUE POUR UN VÉHICULE UTILITAIRE

(30) Priorität: 09.11.2015 DE 102015119194
(43) Veröffentlichungstag der Anmeldung: 19.09.2018
(73) Patentinhaber: KNORR-BREMSE Systeme für Nutzfahrzeuge GmbH, 80809 München (DE)
(72) Erfinder: WEBER, Ralf, 80997 München (DE); KLINGNER, Matthias, 82272 Moorenweis (DE); GRGIC, Stipo, 82110 Germering (DE)
(86) Internationale Anmeldenummer: PCT/EP2016/076996
(87) Internationale Veröffentlichungsnummer: WO 2017/081016

(56) Entgegenhaltungen:
- EP-A1- 0 703 380
- DE-A1- 10 253 642
- DE-A1-102014 114 276
- DE-T2- 69 633 257

## Beschreibung

Die Erfindung betrifft eine Scheibenbremse für ein Nutzfahrzeug nach dem Oberbegriff des Anspruchs 1.

Eine gattungsgemäße Scheibenbremse ist in DE 94 22 342 U1 offenbart. Diese Scheibenbremse weist einen Bremshebel auf, der bei einer Bremsung auf eine Brücke einwirkt, in der mindestens eine Stellspindel mittels einer Gewindepaarung verdrehbar gelagert ist. Diese weist ein Druckstück auf, das bei Betätigung der Bremse durch Verschieben der Brücke an eine Bremsscheibe gepresst Dokument DE 102 53 642 A1 offenbart eine Scheibenbremse gemäß dem Oberbegriff von Anspruch 1.

Zum Ausgleich einer verschleißbedingten Änderung eines vorbestimmten Lüftspiels, d.h. des Abstands zwischen dem Bremsbelag und der Bremsscheibe, ist eine Nachstelleinrichtung vorgesehen, mit der die Stellspindel durch Verdrehen in Richtung der Bremsscheibe verstellt wird. Hierzu ist die Stellspindel mit einem Außengewinde versehen, das in eine dazu korrespondierende Gewindebohrung der Brücke eingreift.

Ein Aufnahmeraum des Bremssattels, in dem die Brücke und der Bremshebel positioniert sind, wird außenseitig, d.h. zur Bremsscheibe hin, durch eine Verschlussplatte verschlossen, die von der Stellspindel durchtreten wird.

Zur Abdichtung dieses Durchtrittsbereichs ist ein Faltenbalg vorgesehen, der einerseits an der Verschlussplatte und andererseits am Druckstück gehalten ist. Dieser besteht üblicherweise aus einem hochelastischen Material, beispielsweise einem Silikonkautschuk, um die Stellspindel über die gesamte Nachstellstrecke überdecken zu können. Zur Zurückstellung der Brücke nach einer Bremsung ist zwischen der Verschlussplatte und der Brücke eine Druckfeder angeordnet.

Hinsichtlich der Belastbarkeit, d.h. der Standzeit des Balges ergeben sich insoweit Probleme, als die beim Bremsen entstehenden relativ hohen Temperaturen auf den Balg einwirken, so dass dieser als Verschleißteil ausgetauscht werden muss.

Dies ist jedoch aufgrund der beengten Platzverhältnisse nur mit einem erheblichen Arbeitsaufwand möglich, der die Unterhaltskosten der Scheibenbremse deutlich nachteilig beeinflusst.

Abgesehen vom zeitlichen Aufwand muss zum Austausch des Balges, aber auch zu einem Bremsbelagwechsel, die Stellspindel mittels der Nachstelleinrichtung zurückgedreht werden, wobei, um diese zu schützen, beim Rück- und Zustellen ein Abreißadapter Verwendung findet, der bei Überschreiten eines bestimmten Drehmoments bricht und so einen Nachsteller der Nachstelleinrichtung vor Überlastung schützt. Des Weiteren wird eine Ausrücksicherung der Nachstelleinrichtung benötigt, da ansonsten die Stellspindel gegen den Nachsteller axial verspannt wird, was dazu führt, dass zum Lösen ein höheres Drehmoment benötigt wird als der Abreißadapter übertragen kann.

Der Erfindung liegt die Aufgabe zugrunde, eine Scheibenbremse der gattungsgemäßen Art so weiterzuentwickeln, dass sie einfacher und kostengünstiger herstell- und montierbar ist und ein Verschleißteilwechsel einfacher sowie eine Beschädigung beteiligter Funktionsteile vermieden wird.

Diese Aufgabe wird durch eine Scheibenbremse mit den Merkmalen des Anspruchs 1 gelöst.

Die neue Scheibenbremse zeichnet sich zunächst einmal dadurch aus, dass sie wesentlich einfacher herstellbar ist als bisher. Hierzu trägt insbesondere bei, dass auf die zum Stand der Technik genannte Ausrücksicherung der Nachstelleinrichtung verzichtet werden kann, da durch den erfindungsgemäß vorgesehenen Sicherungsring eine Rückdrehsicherung geschaffen ist.

Damit ist eine Rückdrehbegrenzung der Stellspindel geschaffen, durch die das vorgenannte Problem der axialen Verspannung der Stellspindel verhindert wird.

Der erfindungsgemäß dazu vorgesehene Sicherungsring, der axial- und verdrehsicher an der Brücke gehalten ist, greift dann formschlüssig in die Stellspindel ein, wenn diese eine entgegen der Zuspannrichtung in die Brücke eingeschraubte Endstellung erreicht hat, so dass der Sicherungsring verhindert, dass die Stellspindel noch weiter zurückgedreht wird, bis in eine Position, in der die besagte axiale Verspannung der Stellspindel möglich wäre.

Da diese damit wirksam verhindert wird, ist auch die dauerhafte Funktionsfähigkeit des Abscheradapters gewährleistet, zumal beim anschließenden Vorwärtsdrehen der Stellspindel die Antriebskraft des Abscheradapters ausreicht. Erkennbar ist damit eine Verbesserung der Funktionssicherheit erreicht, ebenso wie nicht mehr notwendige Reparaturarbeiten, wie sie durch die sozusagen Fehlfunktion der Stellspindel nach dem Stand der Technik eintreten kann.

Der gemäß der Erfindung vorgesehene Formschluss des Sicherungsringes mit der Stellspindel in deren gewindefreiem Endbereich kann dadurch hergestellt sein, dass der Sicherungsring Formschlusselemente aufweist, die in der besagten Stellung der Stellspindel in diese derart eingreifen, dass deren Drehung blockiert ist.

Zur Korrespondenz mit den Formschlusselementen des Sicherungsringes weist die Stellspindel zumindest im gewindefreien Endbereich Axialnuten auf, in die die Formschlusselemente des Sicherungsringes bei Erreichen der Endstellung der Stellspindel eingreifen.

Um eine freie Drehung der Stellspindel gegenüber dem fest stehenden Sicherungsring außerhalb der genannten Endstellung zu ermöglichen, ist der die Axialnuten aufnehmende gewindefreie Endbereich der Stellspindel ansteigend durchmessergrößer als der Gewindebereich. Hierzu kann der Endbereich im Sinne einer umlaufenden Hohlkehle ausgebildet sein, die in einen Kopf übergeht, an dem das Druckstück gehalten ist. D.h., die Axialnuten bilden praktisch eine gekrümmte Vertiefung dieser Hohlkehle.

Zur gegenüber der Brücke ortsfesten Halterung des Sicherungsringes, also zur Verdreh- und Axialsicherung, ist nach einem weiteren Gedanken der Erfindung der Sicherungsring durch einen vorzugsweise reibschlüssig befestigten Haltering an der Brücke gehalten. Hierzu weist der Haltering einen umlaufenden, sich axial zur Stellspindel erstreckenden Kragen auf, dessen lichter Durchmesser so gewählt ist, dass sich mit einem korrespondierenden Bündchen der Brücke ein Presssitz ergibt.

Radial nach innen, d.h. zur Stellspindel hin abgewinkelt, ist an den Kragen ein Anlageschenkel angeformt, der eine axiale Sicherung für den Sicherungsring bildet, der im Übrigen in einem konzentrisch zum Bündchen der Brücke eingebrachten Einstich einliegt, wobei der lichte Durchmesser der durch den Anlageschenkel begrenzten Durchtrittsöffnung für die Stellspindel größer ist als der Durchmesser, insbesondere der Gewindedurchmesser der Stellspindel, so dass diese frei drehen kann.

Zur Verdrehsicherung des Sicherungsringes weist der Haltering im Bereich des radialen Anlageschenkels mindestens einen Ausschnitt auf, der von einer etwa axial abgewinkelten Lasche des Sicherungsringes durchtreten wird, die an den in Drehrichtung der Stellspindel begrenzenden Wandungen des Ausschnitts anliegt.

Die Lasche, bevorzugt sind mehrere, gleichmäßig über den Umfang verteilte vorgesehen, ist im Übrigen so geformt, dass sie an der Stellspindel anliegt zur radialen Abstützung des Sicherungsringes. Außerhalb der Laschen ist der lichte Durchmesser des Sicherungsringes ebenfalls größer als der Durchmesser der Stellspindel, vor allem im Gewindebereich.

Zur Rückdrehsicherung der Stellspindel weist der Sicherungsring als Formschlusselement mindestens eine radial nach innen vorstehende Zunge auf, die dann in Drehrichtung formschlüssig in die Axialnut der Stellspindel eingreift, wenn deren gekrümmter Verlauf bei einer axialen Verstellung der Stellspindel eine Position einnimmt, in der die Zunge in die Axialnut ragt.

Vorteilhafterweise sind mehrere, parallel und abständig zueinander angeordnete Axialnuten in der Stellspindel vorgesehen, die in gleichem Winkelabstand zueinander angeordnet sind, ebenso wie Zungen, die in der vorgenannten Stellung der Stellspindel damit in Eingriff kommen.

Zur unbeweglichen Halterung des Sicherungsringes gegenüber der Brücke sind auch andere konstruktive Lösungen denkbar. Beispielhaft sei hierzu erwähnt, dass der Sicherungsring durch Presssitz an der Brücke gehalten ist, wobei die den Sicherungsring haltenden Reibkräfte größer sind als die zur Zurückdrehung der Stellspindel aufgebrachten Kräfte. Dies betrifft gleichermaßen die Reibkräfte, mit denen der Haltering an der Brücke gehalten ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Scheibenbremse in einer teilweise geschnittenen Draufsicht,
- Figur 2: eine Baugruppe der Scheibenbremse in einer Teil-Explosionsdarstellung,
- Figur 3: die Baugruppe teilweise komplettiert, in einer perspektivi-schen Ansicht
- Figur 4: die Baugruppe nach Figur 2 in einer geschnittenen Drauf-sicht,
- Figur 5: einen Teilausschnitt der Baugruppe nach Figur 4 in einer vergrößerten Draufsicht
- Figur 6: eine Einzelheit der Baugruppe in einer Explosionsdarstellung
- Figur 7: die Einzelheit nach Figur 6 in einer montierten Stellung.

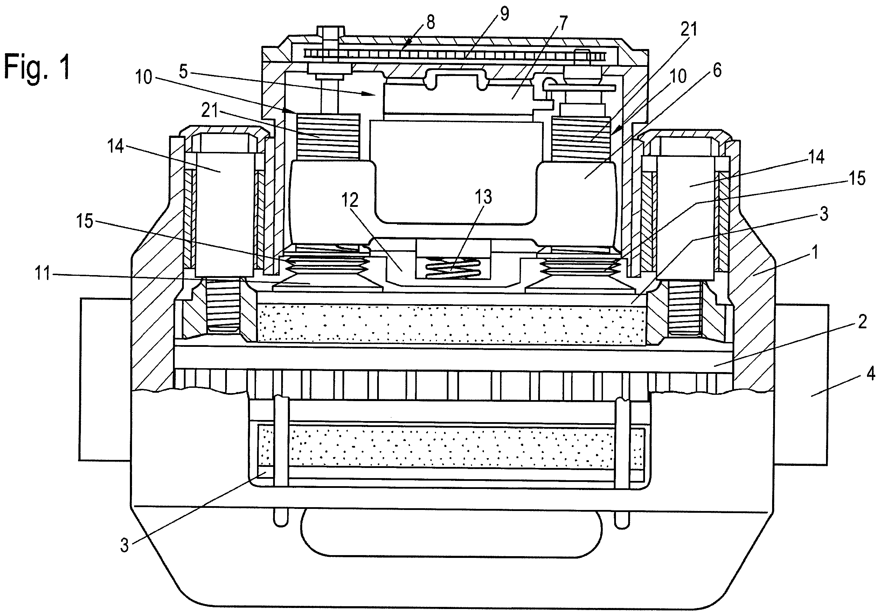

In der **Figur 1** ist eine Scheibenbremse für ein Nutzfahrzeug dargestellt, mit einem eine fahrzeugseitige Bremsscheibe 2 übergreifenden Bremssattel 1, der an einem Bremsträger 4 mittels Führungsholmen 14, bezogen auf die Bremsscheibe 2, axial verschiebbar gelagert ist.

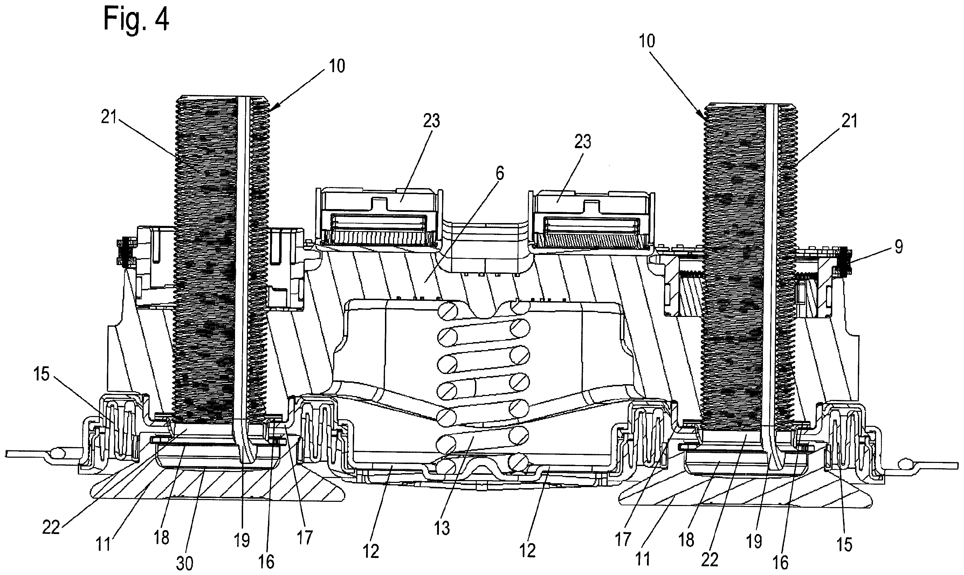

Im Bremssattel 1 ist eine Zuspanneinrichtung 5 angeordnet, mit einem Bremshebel 7, der im Fall einer Bremsung auf eine Brücke 6 einwirkt und sich dabei an Lagerstellen 23 (Fig. 4) abstützt. In die Brücke sind im Beispiel zwei parallel und abständig zueinander angeordnete, mit einem Außengewinde 21 versehene Stellspindeln 10 eingeschraubt, die an ihrem der Bremsscheibe 2 zugewandten Ende jeweils ein Druckstück 11 tragen.

Bei einer Bremsung werden über den verschwenkten Bremshebel 7 und die Brücke 6 die Druckstücke 11 gegen einen zugeordneten Bremsbelag 3 gepresst, der, ebenso wie ein gegenüberliegender, reaktionsseitiger Bremsbelag 3 an die Bremsscheibe 2 gedrückt wird.

Zum Ausgleich eines sich verändernden Lüftspiels, d.h. des Abstands zwischen dem Bremsbelag 3 und der Bremsscheibe 2, ist eine Nachstelleinrichtung 8 vorgesehen, mit der bei Betätigung der Bremse die mit ihrem Außengewinde 21 in ein Innengewinde der Brücke 6 eingreifenden Stellspindeln 10 in Richtung der Bremsscheibe 2 verdrehbar sind.

Zur Synchronisierung der Nachstellung weist die Nachstelleinrichtung 8 einen Zugmitteltrieb 9 auf, mit einem Zugmittel, im Beispiel in Form einer Kette.

Zur Rückstellung der Brücke 6 nach einem Lösen der Bremse ist eine Druckfeder 13 vorgesehen, die sich einerseits an der Brücke 6 und andererseits an einer Verschlussplatte 12 abstützt, die einen die Zuspanneinrichtung 5 aufnehmenden Aufnahmeraum des Bremssattels 1 auf der der Bremsscheibe 2 zugewandten Seite verschließt und dabei fest mit dem Bremssattel 1 verbunden ist, beispielsweise durch Verschrauben.

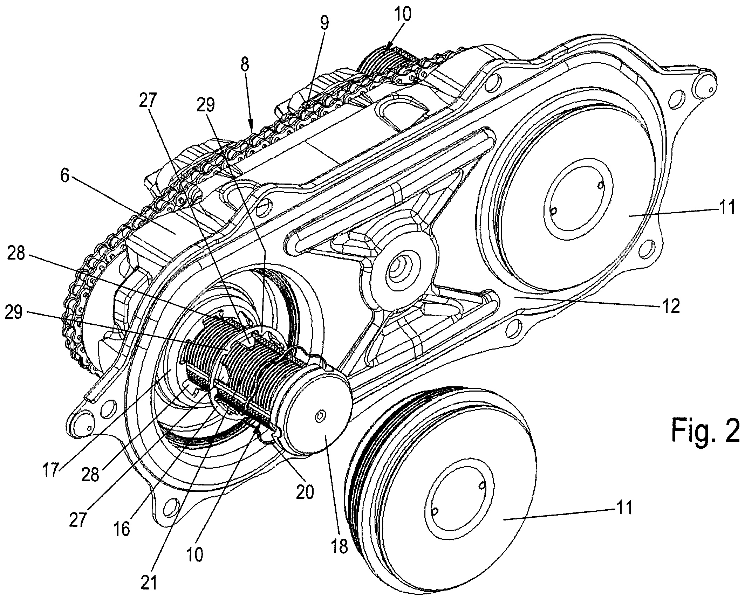

In der **Figur 2** ist in Explosionsdarstellung ein Teil der Scheibenbremse abgebildet, der als vormontierte Baueinheit mit der Brücke 6, dem Zugmitteltrieb 9, den Stellspindeln 10 sowie den Druckstücken 11 und der Verschlussplatte 12 so komplettiert in den Bremssattel 1 eingesetzt wird.

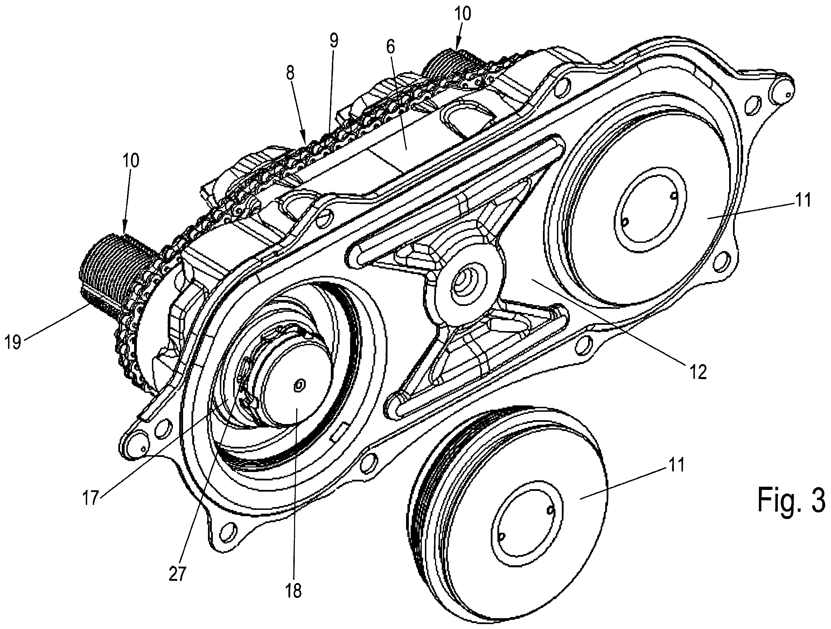

Gemäß der Erfindung ist ein Sicherungsring 16 axial und verdrehgesichert an der Brücke 6 gehalten. Dies ist in der **Figur 3** erkennbar, die lediglich in einer Explosionsdarstellung das linksseitige, der entsprechenden Stellspindel 10 zugeordnete Druckstück 11 vor einer Montage wiedergibt.

Weiter ist in den Figuren abgebildet, dass der Sicherungsring 16 mehrere, über den Umfang verteilte, radial zur Stellspindel 10 hin gerichtete Zungen 29 aufweist, die in einer entgegen der Zuspannrichtung der Bremse eingeschraubten Endstellung der Stellspindel 10 formschlüssig in einen dem Druckstück 11 zugeordneten gewindefreien Endbereich 22 (**Figur 4**) der Stellspindel 10 eingreift.

Zur Verdreh- und Axialsicherung des Sicherungsringes 16 ist ein Haltering 17 vorgesehen, der fest mit der Brücke 6 verbunden ist, insbesondere durch Reibschluss, und der über den Umfang verteilt zur Stellspindel 10 hin offene Ausschnitte 28 aufweist, die von Laschen 27 des Sicherungsringes 16 durchtreten sind, die sich zur Verdrehsicherung an den Seitenwänden der Ausschnitte 28 abstützen.

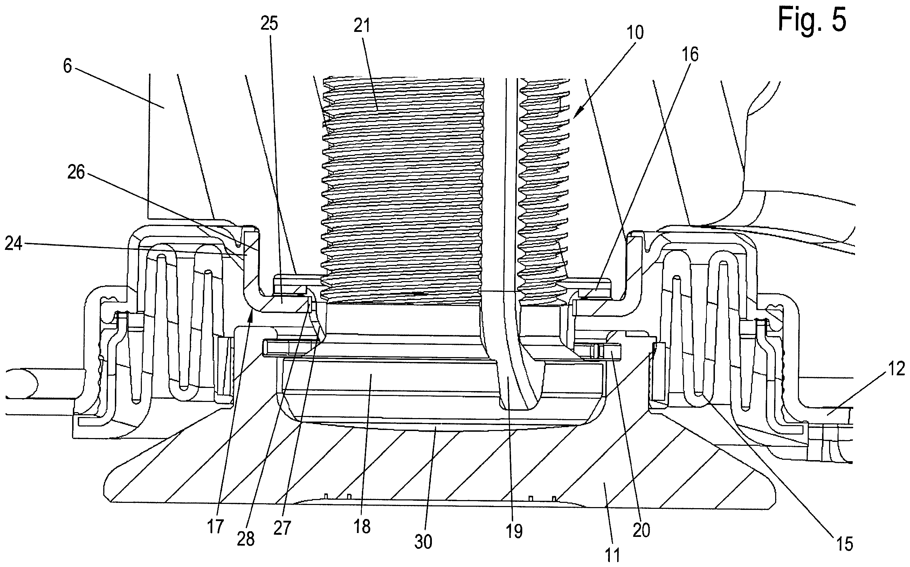

Dabei ist der Sicherungsring 16 zwischen dem Haltering 17 und der Brücke 6 angeordnet, wie dies besonders deutlich in den **Figuren 4** **und** **5** erkennbar ist. Die Laschen 27 dienen im Übrigen der Abstützung des Sicherungsringes 16 an der Stellspindel 10.

In der **Figur 4** ist die genannte Baueinheit in einer geschnittenen Draufsicht zu erkennen, wobei beide Druckstücke 11 an der Stellspindel 10 befestigt sind, wozu ein Sicherungselement 20 in einer Ringnut des Druckstücks 11 einliegt, und so weit radial nach innen ragt, dass es einen Anschlag für einen Kopf 18 der Stellspindel 10 bildet, der in einer Aufnahmeöffnung 30 des Druckstücks 11 einliegt, wobei die Stellspindel 10 gegenüber dem Druckstück 11 verdrehbar ist.

Die **Figur 5** zeigt einen vergrößerten Ausschnitt der Figur 4 im Bereich des linken Druckstücks 11. Darin ist weiterhin zu erkennen, dass der Haltering 17 einen axial ausgerichteten Kragen 24 aufweist, der im Sinne eines Presssitzes an einem Bündchen 26 der Brücke 6 anliegt, während ein radial nach innen abgewinkelter Anlageschenkel 25 der axialen Verschiebesicherung des Sicherungsringes 16 dient.

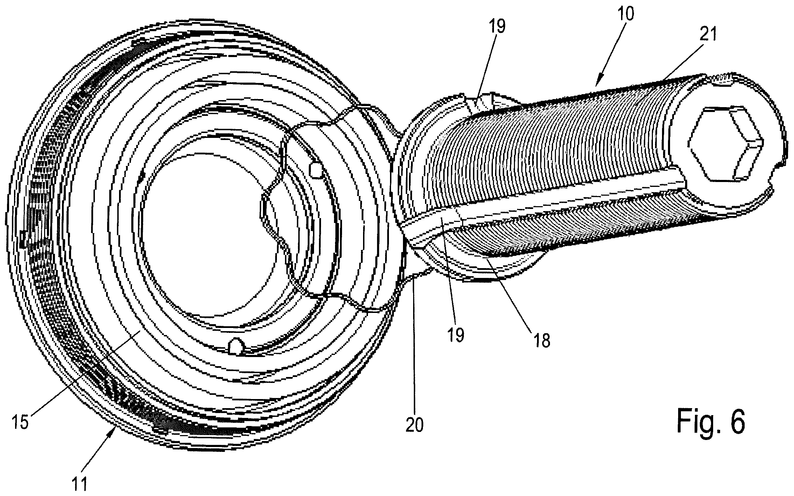

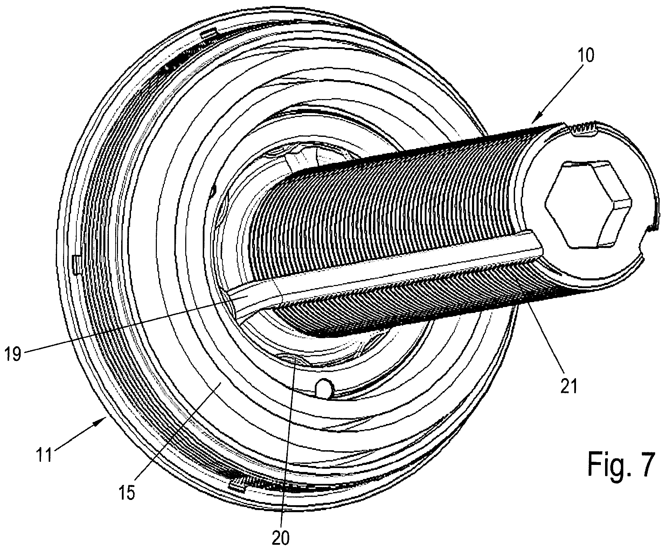

Darin, ebenso wie in den **Figuren 6** **und** **7****,** die jeweils eine Stellspindel 10 mit zugeordnetem Druckstück 11 als Einzelheit wiedergeben, das die Stellspindel 10 im Beispiel drei, in gleichem Winkelabstand zueinander angeordnete Axialnuten 19 aufweist, die im gewindefreien Endbereich 22 der Stellspindel 10 konkav gekrümmt verläuft, bis in den Kopf 18.

Zur erfindungsgemäß vorgesehenen Verdrehsicherung der Stellspindel 10 in der entgegen der Zuspannrichtung eingeschraubten Endstellung greift jeweils eine Zunge 29 in die Krümmung der Axialnut 19 ein, so dass eine Verdrehung der Stellspindel 10 blockiert ist.

Im Bereich außerhalb des Eingriffs liegen die Zungen 29 gegenüber dem Außengewinde 21 der Stellspindel 10 frei, so dass die Stellspindel 10 verdrehbar ist.

Wie die **Figur 2** sehr deutlich wiedergibt, sind die Zungen 29 zwischen den Laschen 27 angeordnet, wobei die Anzahl der Zungen 29 ein Mehrfaches der Anzahl der Axialnuten 19 ist, so dass die Verdrehsicherung in Endstellung der Stellspindel 10 auch schon bei einem entsprechend kleinen Verdrehwinkel gegeben ist.

Die Figuren 6 und 7 zeigen, wie erwähnt, die Stellspindel 10 und das Druckstück 11 als Einzelheit, wobei die Figur 6 eine Explosionsabbildung wiedergibt und die Figur 7 eine montierte Stellung des Druckstücks 11 mit der Stellspindel 10.

### Bezugszeichenliste

- 1: Bremssattel
- 2: Bremsscheibe
- 3: Bremsbelag
- 4: Bremsträger
- 5: Zuspanneinrichtung
- 6: Brücke
- 7: Bremshebel
- 8: Nachstelleinrichtung
- 9: Zugmitteltrieb
- 10: Stellspindel
- 11: Druckstück
- 12: Verschlussplatte
- 13: Druckfeder
- 14: Führungsholm
- 15: Faltenbalg
- 16: Sicherungsring
- 17: Halterung
- 18: Kopf
- 19: Axialnut
- 20: Sicherungselement
- 21: Außengewinde
- 22: gewindefreier Endbereich
- 23: Lagerstelle
- 24: Kragen
- 25: Anlageschenkel
- 26: Bündchen
- 27: Lasche
- 28: Ausschnitt
- 29: Zunge
- 30: Aufnahmeöffnung

## Patentansprüche

1. Scheibenbremse für ein Nutzfahrzeug, mit einem eine Bremsscheibe (2) übergreifenden Bremssattel (1), mindestens einer Zuspanneinrichtung (5) zum Zuspannen der Scheibenbremse mittels einer verschiebbar geführten Brücke (6), wobei die Brücke (6) mindestens eine Gewindebohrung aufweist, in die eine mit einem Außengewinde (21) versehene, eine mit dem Bremssattel (1) verbundene Verschlussplatte (12) durchtretende Stellspindel (10) eingeschraubt ist, die ein dazu verdrehbares Druckstück (11) trägt, mit dem ein Bremsbelag (3) gegen die Bremsscheibe (2) drückbar ist, und einer mit der Stellspindel (10) in Wirkverbindung stehenden Nachstelleinrichtung (8) zum Nachstellen eines Lüftspiels,
**dadurch gekennzeichnet, dass**
ein Sicherungsring (16) vorgesehen ist, der axial- und verdrehgesichert an der Brücke (6) gehalten ist und der in einer entgegen der Zuspannrichtung eingeschraubten Endstellung der Stellspindel (10) zu deren Verdrehsicherung formschlüssig in einen dem Druckstück (11) zugeordneten, gewindefreien Endbereich (22) der Stellspindel (10) eingreift.

2. Scheibenbremse nach Anspruch 1,
**dadurch gekennzeichnet, dass**
der Sicherungsring (16) zwischen der Brücke (6) und einem daran fest gehaltenen Haltering (17) angeordnet ist.

3. Scheibenbremse nach Anspruch 1 oder 2,
**dadurch gekennzeichnet, dass**
der Sicherungsring (16) mindestens eine sich radial nach innen erstreckende Zunge (29) aufweist, die gegenüber dem Außengewinde (21) frei liegt und die in der entgegen der Zuspannrichtung eingeschraubten Endstellung der Stellspindel (10) in eine Axialnut (19) der Stellspindel (10) eingreift.

4. Scheibenbremse nach einem der vorhergehenden Ansprüche,
**dadurch gekennzeichnet, dass**
die Axialnut (19) im gewindefreien Endbereich (22) konkav gekrümmt in einen Kopf (18) der Stellspindel (10) übergeht, dessen Außendurchmesser größer ist als das Außengewinde (21).

5. Scheibenbremse nach einem der vorhergehenden Ansprüche,
**dadurch gekennzeichnet, dass**
der Sicherungsring (16) mindestens eine, bezogen auf die Stellspindel (10) sich axial erstreckende Lasche (27) aufweist, die in einen Ausschnitt (28) des Halterings (17) eingreift, wobei die sich gegenüberliegenden Wände des Ausschnitts (28) eine Verdrehbegrenzung für die Lasche (27) bilden.

6. Scheibenbremse nach einem der vorhergehenden Ansprüche,
**dadurch gekennzeichnet, dass**
mehrere, unter gleichem Winkelabstand zueinander parallel verlaufende Axialnuten (19) vorgesehen sind.

7. Scheibenbremse nach einem der vorhergehenden Ansprüche,
**dadurch gekennzeichnet, dass**
mehrere, in gleichem Winkelabstand zueinander angeordnete Axialnuten (19) vorgesehen sind.

8. Scheibenbremse nach einem der vorhergehenden Ansprüche,
**dadurch gekennzeichnet, dass**
die Anzahl der Zungen (29) ein Mehrfaches größer ist als die Anzahl der Axialnuten (19).

9. Scheibenbremse nach einem der vorhergehenden Ansprüche,
**dadurch gekennzeichnet, dass**
jede Zunge (29) zwischen zwei Laschen (27) angeordnet ist.

10. Scheibenbremse nach einem der vorhergehenden Ansprüche,
**dadurch gekennzeichnet, dass**
der Haltering (17) reibschlüssig mit der Brücke (6) verbunden ist.

11. Scheibenbremse nach einem der vorhergehenden Ansprüche,
**dadurch gekennzeichnet, dass**
der Haltering (17) einen axial ausgerichteten umlaufenden Kragen (24) aufweist, der reibschlüssig an einem Bündchen (26) der Brücke (6) gehalten ist.

12. Scheibenbremse nach einem der vorhergehenden Ansprüche,
**dadurch gekennzeichnet, dass**
am Haltering (17) ein radial nach innen zum Kragen (24) abgewinkelter Anlageschenkel (25) vorgesehen ist, der den Sicherungsring (16) überdeckt.

13. Scheibenbremse nach einem der vorhergehenden Ansprüche,
**dadurch gekennzeichnet, dass**
die Laschen (27) am Außengewinde (21) der Stellspindel (10) anliegen.

## Claims

1. Disc brake for a commercial vehicle, having a brake calliper (1) encompassing a brake disc (2), at least one application device (5) for applying the disc brake by means of a displaceably guided bridge (6), wherein the bridge (6) has at least one threaded hole, into which an actuating spindle (10) passing through a closure plate (12) connected to the brake calliper (1) and provided with a male thread (21) is screwed, said spindle bearing a pressure piece (11), which can be rotated relative thereto, by means of which pressure piece a brake pad (3) can be pressed against the brake disc (2), and a readjusting device (8) operatively connected to the actuating spindle (10) for readjusting a clearance,
**characterised in that**
a circlip (16) is provided, which is held on the bridge (6) so as to be secured axially and against rotation and which, in an end position of the actuating spindle (10) screwed in counter to the application direction, in order to secure the actuating spindle against rotation, engages positively with a thread-free end region (22) of the actuating spindle (10) which is assigned to the pressure piece (11).

2. Disc brake according to claim 1,
**characterised in that**
the circlip (16) is located between the bridge (6) and a holding ring (17) held firmly against it.

3. Disc brake according to claim 1 or 2,
**characterised in that**
the circlip (16) has at least one radially inward-extending tongue (29), which is exposed with respect to the male thread (21) and which engages, in the end position of the actuating spindle (10) screwed in counter to the application direction, with an axial groove (19) of the actuating spindle (10).

4. Disc brake according to any of the preceding claims,
**characterised in that**
the axial groove (19) in the thread-free end region (22) is curved concavely and merges into a head (18) of the actuating spindle (10), whose outer diameter is greater than the male thread (21).

5. Disc brake according to any of the preceding claims,
**characterised in that**
the circlip (16) has at least one tab (27) which extends axially in relation to the actuating spindle (10) and which engages with a cut-out (28) of the holding ring (17), wherein the opposite walls of the cut-out (28) form a rotation stop for the tab (27).

6. Disc brake according to any of the preceding claims,
**characterised in that**
several axial grooves (19) are provided, extending at the same angular distance parallel to each other.

7. Disc brake according to any of the preceding claims,
**characterised in that**
several axial grooves (19) are provided, arranged at the same angular distance relative to each other.

8. Disc brake according to any of the preceding claims,
**characterised in that**
the number of tongues (29) is larger by a multiple than the number of axial grooves (19).

9. Disc brake according to any of the preceding claims,
**characterised in that**
each tongue (29) is arranged between two tabs (27).

10. Disc brake according to any of the preceding claims,
**characterised in that**
the holding ring (17) is joined by friction to the bridge (6).

11. Disc brake according to any of the preceding claims,
**characterised in that**
the holding ring (17) has an axially oriented encircling collar (24), which is held by friction against a shoulder (26) of the bridge (6).

12. Disc brake according to any of the preceding claims,
**characterised in that**
a contact leg (25) is provided on the holding ring (17), bent radially inward toward the collar (24), which covers the circlip (16).

13. Disc brake according to any of the preceding claims,
**characterised in that**
the tabs (27) lie against the male thread (21) of the actuating spindle (10).

## Revendications

1. Frein à disque d'un véhicule utilitaire, comprenant un étrier (1) de frein, chevauchant un disque (2) de frein, au moins un dispositif (5) de serrage, pour serrer le frein à disque au moyen d'un pontet (6) guidé à coulissement, le pontet (6) ayant au moins un taraudage, dans lequel est vissée une broche (10) de réglage, qui est pourvue d'un filetage (21), qui traverse une plaque (12) de fermeture reliée à l'étrier (1) de frein et qui porte une pièce (11) tournante d'application d'une pression, par laquelle une garniture (3) de frein peut être repoussée sur le disque (2) de frein, et un dispositif (8) de rattrapage, en liaison active avec la broche (10) de réglage, pour rattraper un jeu de garnitures,
**caractérisé en ce qu'**
il est prévu une bague (16) de sécurité, qui est fixée, axialement et sans pouvoir tourner, au pontet (6) et qui, dans une position d'extrémité, vissée dans le sens contraire à la direction de serrage, de la broche (10) de réglage, pénètre, pour la fixation en rotation de celle-ci, à complémentarité de forme dans une partie (22) d'extrémité associée à la pièce (11) d'application d'une pression et sans filetage de la broche (10) de réglage.

2. Frein à disque suivant la revendication 1,
**caractérisé en ce que**
la bague (16) de fixation est montée entre le pontet (6) et une bague (17) de retenue, qui y est retenue fixement.

3. Frein à disque suivant la revendication 1 ou 2,
**caractérisé en ce que**
la bague (16) de fixation a au moins une languette (29), qui s'étend vers l'intérieur radialement, qui est libre par rapport au filetage (21) et qui, dans la position d'extrémité, vissée dans le sens contraire au serrage de la broche (10) de réglage, dans une rainure (19) axiale de la broche (10) de réglage.

4. Frein à disque suivant l'une des revendications précédentes,
**caractérisé en ce que**
la rainure (19) axiale se transforme, dans la partie (22) d'extrémité sans filetage incurvée de manière concave, en une tête (18) de la broche (10) de réglage, dont le diamètre extérieur est plus grand que le filetage (21).

5. Frein à disque suivant l'une des revendications précédentes,
**caractérisé en ce que**
la bague (16) de fixation a au moins un jonc (27), qui s'étend axialement par rapport à la broche (10) de réglage et qui pénètre dans une entaille (28) de la bague (17) de retenue, les parois opposées de l'entaille (28) formant une limitation à la rotation du jonc (27).

6. Frein à disque suivant l'une des revendications précédentes,
**caractérisé en ce qu'**
il est prévu plusieurs rainures (19) axiales, s'étendant parallèlement entre elles et équidistantes angulairement.

7. Frein à disque suivant l'une des revendications précédentes,
**caractérisé en ce qu'**
il est prévu plusieurs rainures (19) axiales équidistantes angulairement.

8. Frein à disque suivant l'une des revendications précédentes,
**caractérisé en ce que**
les nombres des languettes (29) est plusieurs fois plus grand que le nombre des rainures (19) axiales.

9. Frein à disque suivant l'une des revendications précédentes,
**caractérisé en ce que**
chaque languette (29) est disposée entre deux joncs (27).

10. Frein à disque suivant l'une des revendications précédentes,
**caractérisé en ce que**
la bague (17) de retenue est assemblée à coopération de frottement au pontet (6).

11. Frein à disque suivant l'une des revendications précédentes,
**caractérisé en ce que**
la bague (17) de retenue a un collet (24), qui fait le tour, en étant dirigé axialement, et qui est retenu à frottement sur une collerette (26) du pontet (6).

12. Frein à disque suivant l'une des revendications précédentes,
**caractérisé en ce qu'**
il est prévu, sur la bague (17) de retenue, une branche (25) de contact, qui est coudée vers l'intérieur radialement par rapport au collet (24) et qui recouvre la bague (16) de fixation.

13. Frein à disque suivant l'une des revendications précédentes,
**caractérisé en ce que**
les joncs (27) s'appliquent au filetage (21) de la broche (10) de réglage.
